# EUROPEAN PATENT SPECIFICATION

(11) **EP 3 698 683 B1**
(45) Date of publication and mention of the grant of the patent: **03.11.2021**
(21) Application number: 20151604.4
(22) Date of filing: 14.01.2020
(51) Int. Cl.: A47J 27/086, A47J 27/088, A47J 27/09

(54) **INDUCTION HEATER COOKER**
INDUKTIONSKOCHGERÄT
APPAREIL DE CUISSON À CHAUFFAGE PAR INDUCTION

(30) Priority: 20.02.2019 KR 20190020145; 19.11.2019 KR 20190148579
(43) Date of publication of application: 26.08.2020
(73) Proprietor: LG Electronics Inc., SEOUL, 07336 (KR)
(72) Inventor: NAM, Hyeunsik, 08592 Seoul (KR); KIM, Wan Soo, 08592 Seoul (KR); PARK, Byungkyu, 08592 Seoul (KR)
(74) Representative: Vossius & Partner Patentanwälte Rechtsanwälte mbB

(56) References cited:
- WO-A1-2018/099233
- KR-A- 20110 004 515

## Description

### BACKGROUND

### 1. Field

The present disclosure relates to an induction heating cooker that may electrically figure out whether a main body and a lid are normally coupled.

### 2. Background

In general, an electric cooker is comprised of a main body and a lid. The lid is coupled to the main body, and seals the inside of the cooker. Heating and cooking operations of the cooker are performed in a state in which the inside of the cooker is sealed.

When a food item is heated and cooked in the cooker, pressure in the cooker is rapidly increased. In this case, when the lid and the main body are abnormally coupled, the lid may abnormally escape from the main body due to the pressure inside the cooker, and the impact that occurs when the lid escapes from the main body may trigger an explosion or a fire.

Accordingly, various methods for detecting whether the lid is normally coupled to guarantee safety of users have been presented.

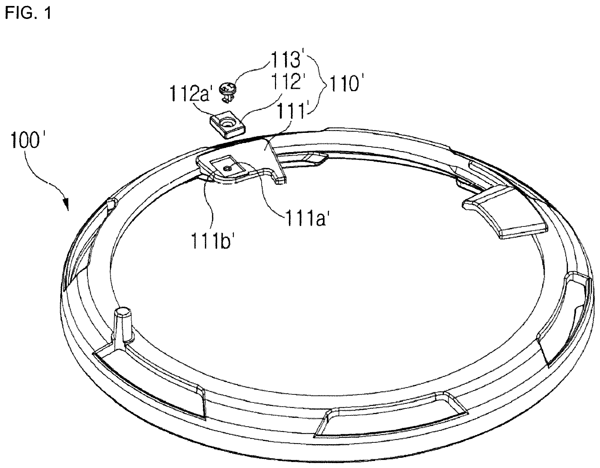

In relation to this, an apparatus for sensing locking of a lid of an electrical pressure rice cooker is disclosed in Korean Model Utility Publication No. 20-2009-0000032 (hereinafter referred to as Prior Art Document 1). Below, a method of sensing locking of a lid of the related art is described with reference to FIG. 1.

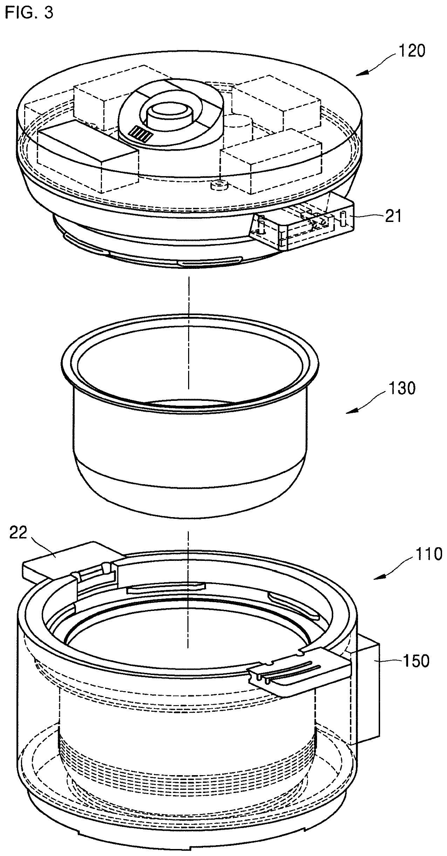

FIG. 1 is a view illustrating a method of sensing locking of a lid of an electric rice cooker of the related art. FIG. 1 is excerpted from the drawing (FIG. 3) in Prior Art Document 1 and illustrates an entire structure of a locking ring for sensing locking of a lid. Some of the reference numerals in FIG. 1 may differ from the reference numerals in Prior Art Document 1.

Referring to FIG. 1, a magnetic member 110' is installed on one side of a locking ring 100' that is swivably mounted onto the inside of the lid of the rice cooker, that is swiveled by a handle installed on the outside of the lid, and that locks or unlocks a main body and the lid of the rice cooker.

The magnetic member 110' is comprised of a plate-type bracket 111' extending in a circular center direction of the locking ring 100' at one side of an inner circumferential surface of the locking ring 100', a magnet 112' mounted onto an upper surface of the bracket 111', and a hook 113' allowing the magnet 112' to be coupled to the bracket 111'.

A reed switch is installed near the magnetic member 110' and is operated by magnetic properties of the magnet 112'. Specifically, when the locking ring 100' is swiveled in one direction and then the lid is locked, the reed switch is connected by the magnetic properties of the magnet 112', and, when the locking ring 100' is swiveled in the other direction and then the lid is unlocked, the reed switch is not affected by the magnetic properties of the magnet 112' and is unconnected.

A controller in Prior Art Document 1 is electrically connected with the reed switch and, on the basis of whether the reed switch is connected, determines locking of the lid.

According to Prior Art Document 1, an additional component (the magnetic member 110' and the reed switch) for sensing locking of the lid has to be installed in the rice cooker, thereby requiring an additional installation space and causing an increase in production costs of the rice cooker.

According to Prior Art Document 1, wires for an electric connection between the reed switch and the controller (e.g., a PCB) are additionally required, thereby causing a decrease in productivity of the rice cooker.

KR 2011 0004515 A relates to an induction heating rice pot with a dual warmth keeping structure including: a main body unit, a lid unit, an inner pot, a cover unit, a working coil, and a heat radiating unit. The lid unit is installed on the top of the main body unit. The lid unit is opened or closed. The inner pot is mounted inside the main body unit. The cover unit has a dual structure of inner and outer covers. The working coil is installed on the side or a lower side of the cover unit. The working coil inductively heats an inner pot. The heat radiating unit is located in a lower part of the cover unit. The heat radiating unit discharges heat generated in the cover unit to the outside.

WO 2018/099233 A1 relates to a split-type electric pressure cooker comprising: a cooker body and a cooker lid, the cooker body being provided with a power supply device. The split-type electric pressure cooker further comprises: a mechanical vent valve, comprising a valve seat and a valve cover, wherein the valve seat is fixedly mounted on the cooker lid, and the valve cover can be movably mounted on the valve seat; a power transmitting device mounted on the cooker body and able to be electrically connected to the power supply device; a power receiving device mounted on the cooker lid; and a motor driving device mounted on the cooker lid and electrically connected to the power receiving device, the electric motor driving device being used for driving the valve cover to move so as to open or close the mechanical vent valve.

### SUMMARY

The invention is specified by the independent claim. Preferred embodiments are defined in the dependent claims.

The present disclosure is directed to providing an induction heating cooker that may electrically figure out whether a main body and a lid are normally coupled.

Additionally, the present disclosure is directed to providing an induction heating cooker that may perform a cooking operation by wirelessly receiving power from an induction heating apparatus.

Further, the present disclosure is directed to providing an induction heating cooker that may use a magnetic field generated in an area having low efficiency of delivery of heat to an internal pot as power of an internal electronic device.

Furthermore, the present disclosure is directed to providing an induction heating cooker that may heat a lateral surface of an internal pot as well as a bottom surface of the internal pot using a magnetic field generated by a working coil.

Objectives of the present disclosure are not limited to what has been described. Additionally, other objectives and advantages that have not been mentioned may be clearly understood from the following description and may be more clearly understood from embodiments. Further, it will be understood that the objectives and advantages of the present disclosure may be realized via means and a combination thereof that are described in the appended claims.

The present disclosure may determine a coupling state of the lid on the basis of power supplied through first and second terminals that are connected at the time of a rotation-coupling of the lid, thereby electrically figuring out whether the main body and the lid are normally coupled.

The present disclosure may include a coil part that is provided on the bottom surface of the main body and that supplies electric currents induced by a magnetic field generated by the working coil of the induction heating apparatus to an electronic device in the lid, thereby capable of performing a cooking operation using power wirelessly received from the induction heating apparatus.

The present disclosure may drive the electronic device using electric currents induced to a power receiving coil placed in parallel with the working coil at a lower portion of an edge area of the internal pot, thereby using a magnetic field generated in an area having low efficiency of delivery of heat to the internal pot as power of the internal electronic device.

The present disclosure may include the internal pot placed on the working coil, and a heating coil placed perpendicularly on an outer circumferential surface of the internal pot and generating a magnetic field, thereby capable of heating the lateral surface of the internal pot as well as the bottom surface of the internal pot.

The induction heating cooker may electrically figure out whether the main body and the lid are normally coupled without an additional physical component, thereby accurately detecting a coupling state of the lid without causing an increase in production costs of an induction heating cooker and a decrease in the productivity of an induction heating cooker.

The induction heating cooker may perform a cooking operation by wirelessly receiving power from the induction heating apparatus, thereby performing all operations for convenience of users as well as an operation of heating an item subject to cooking without connecting to external power or having an internal battery.

The induction heating cooker may use a magnetic field generated in the area having low efficiency of delivery of heat to the internal pot as power of the internal electronic device, thereby capable of effectively using power wirelessly supplied from the induction heating apparatus for a cooking operation.

The induction heating cooker may heat the lateral surface of the internal pot as well as the bottom surface of the internal pot using a magnetic field generated in the coil part, thereby forming a plurality of heat delivery paths using a single heat source and ensuring temperature uniformity of the internal pot.

Detailed effects of the present disclosure are described together with the above-described effects in the detailed description of the disclosure.

### BRIEF DESCRIPTION OF THE DRAWINGS

Embodiments are described in detail with reference to the following drawings, wherein:
FIG. 1 is a view illustrating a method of sensing locking of a lid of an electric rice cooker of the related art;
FIG. 2 is a view illustrating an exemplary induction heating cooker operating on an induction heating apparatus;
FIG. 3 is a view separately illustrating a lid, an internal pot and a main body constituting the induction heating cooker in FIG. 2;
FIG. 4 is a view illustrating a rotation-coupling of a lid and a main body;
FIGS. 5a and 5b are views illustrating an arrangement of a power receiving coil according to each example;
FIG. 6 is an inner block diagram illustrating a control flow of the induction heating cooker and the induction heating apparatus in FIG. 2;
FIGS. 7a and 7b are views illustrating terminals, which are respectively provided at a lid handle and a main body handle, connecting to each other by a rotation-coupling of a lid;
FIG. 8 is a view illustrating a projection-shaped first terminal inserted into and fixed to a second terminal that is a concave elastic member; and
FIGS. 9a to 9c are views illustrating a process in which terminals respectively provided at a guide jaw and a stopping jaw are connected to each other by a rotation-coupling of a lid.

### DETAILED DESCRIPTION

The above-described objectives, features and advantages are specifically described with reference to the attached drawings. Preferredembodiment of the present disclosure are specifically described with reference to the attached drawings. Throughout the drawings, identical reference numerals denote identical or similar components.

When any component is described as being "at an upper portion (or a lower portion)" of a component, or "on (or under)" a component, any component may be placed on an upper surface (a lower surface) of the component, and an additional component may be interposed between the component and any component placed on (or under) the component.

When a component is described as being "connected," "coupled" or "connected" to another component, the component may be directly connected or able to be connected to another component; however, it is also to be understood that an additional component may be "interposed" between the two components, or the two components may be "connected," "coupled" or "connected" through an additional component.

The terms "A or B", "at least one of A or/and B", or "one or more of A or/and B" as used herein include all possible combinations of items enumerated with them. For example, "A or B", "at least one of A and B", or "at least one of A or B" means (1) including at least one A, (2) including at least one B, or (3) including both at least one A and at least one B.

The present disclosure relates to an induction heating cooker that may electrically figure out whether a main body and a lid are normally coupled.

Below, an exemplary induction heating cooker is described with reference to the drawings.

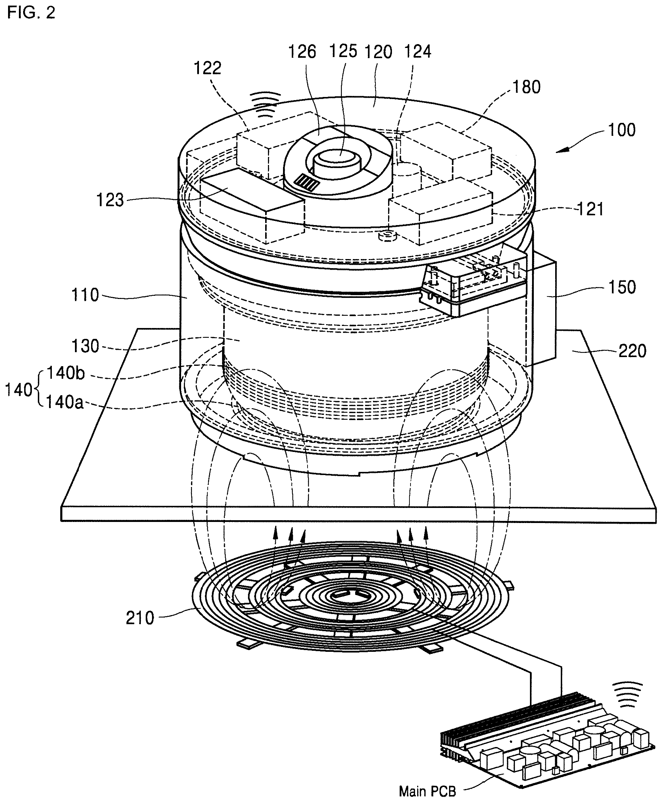

FIG. 2 is a view illustrating an exemplary induction heating cooker operating on an induction heating apparatus, and FIG. 3 is a view separately illustrating a lid, an internal pot and a main body constituting the induction heating cooker in FIG. 2.

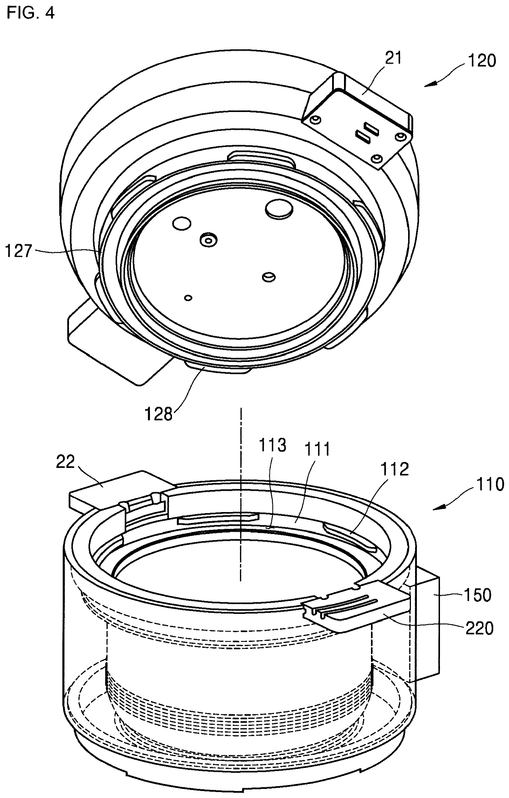

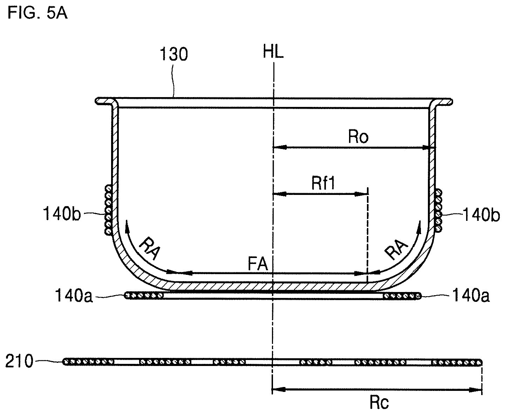

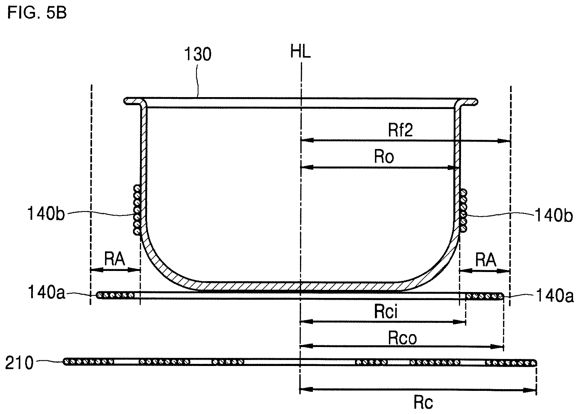

FIG. 4 is a view illustrating a rotation-coupling between a lid and a main body. Additionally, FIGS. 5a and 5b are views illustrating an arrangement of a power receiving coil according to each example.

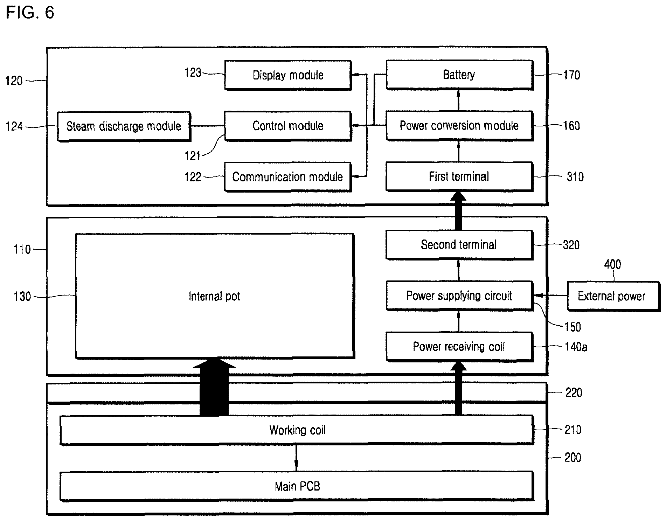

FIG. 6 is an inner block diagram illustrating a control flow of the induction heating cooker and the induction heating apparatus in FIG. 2.

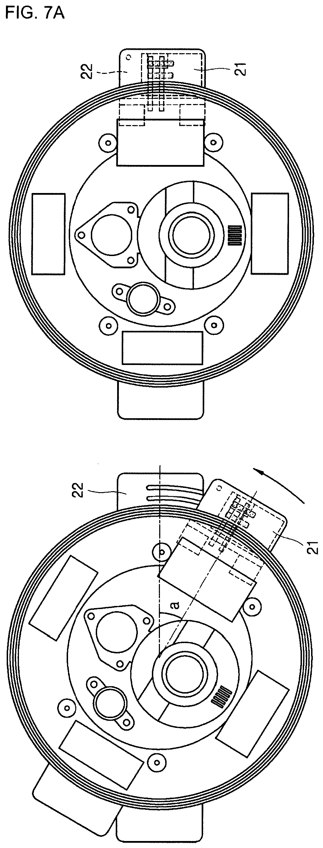

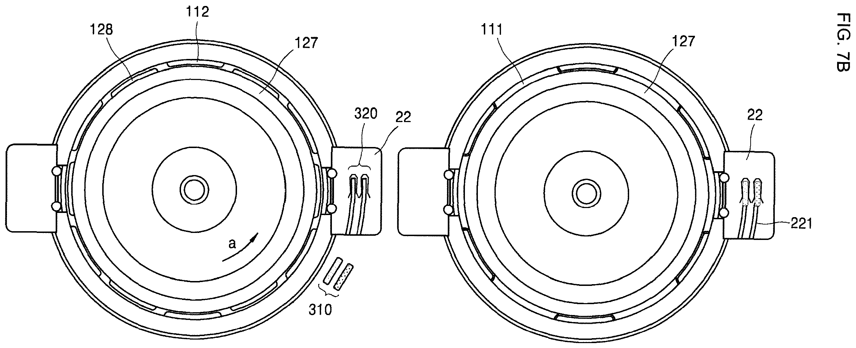

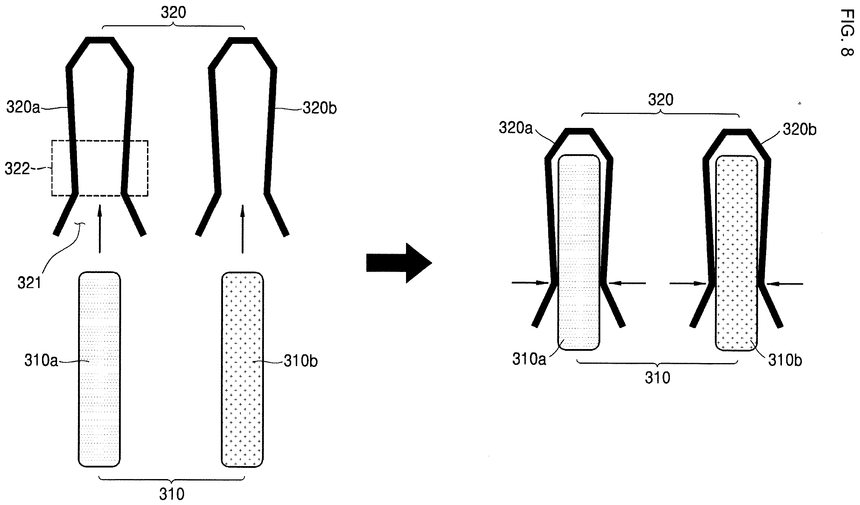

FIGS. 7a and 7b are views illustrating terminals, which are respectively provided at a lid handle and a main body handle, connecting to each other by a rotation-coupling of a lid. Additionally, FIG. 8 is a view illustrating a projection-shaped first terminal inserted into and fixed to a second terminal that is a concave elastic member.

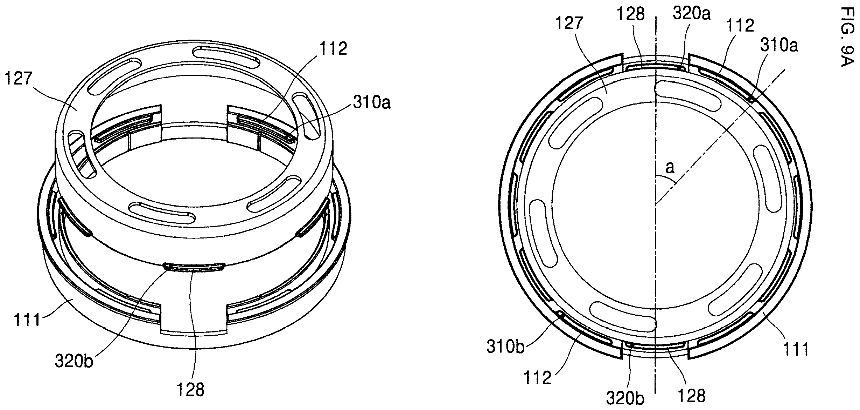

FIGS. 9a to 9c are views illustrating a process in which terminals respectively provided at a guide jaw and a stopping jaw are connected to each other by a rotation-coupling of a lid.

Referring to FIGS. 2 and 3, the exemplary induction heating cooker 100 may be largely comprised of a main body 110, a lid 120, and an internal pot 130. The main body 110 may be provided with a coil part 140 for heating an internal pot in the main body 110, and a power supplying circuit 150 on one lateral surface of the main body 110. The induction heating cooker 100 illustrated in FIGS. 2 and 3 is provided as an embodiment, and parts and components of the induction heating cooker 100 are not limited to those of the embodiment illustrated in FIGS. 2 and 3. When necessary, some parts and components may be added, modified or removed.

The induction heating cooker 100 of the present disclosure may be any cooker that heats an internal pot using electromagnetic induction. As an example, a method of heating the internal pot 130 by directly supplying electric currents to a coil placed along an outer surface of the internal pot 130 using external power 400 may be applied to the induction heating cooker 100 of the disclosure. As another example, a method of heating the internal pot 130 using magnetic fields generated by a working coil 210 of an induction heating apparatus 200 may also be applied to the induction heating cooker 100 of the present disclosure

Below, a process in which the induction heating cooker 100 of the disclosure operates on the induction heating apparatus 200 generating a magnetic field in a state in which the induction heating cooker 100 is not connected with the external power 400 is mainly described, and a process in which the induction heating cooker 100 of the disclosure operates in a state in which the induction heating cooker 100 is connected with the external power 400 is additionally described.

The induction heating cooker 100, as illustrated in FIG. 2, may operate in a state of being placed on an upper plate 220 of any induction heating apparatus 200 provided with a working coil 210. Specifically, the induction heating cooker 100 may operate on a line perpendicular to a line of the working coil 210 in the state of being placed on the upper plate 220 of the induction heating apparatus 200.

A main PCB (printed circuit board) of the induction heating apparatus 200 may supply electric currents to the working coil 210 and, accordingly, a magnetic field may be generated in the working coil 210.

The main body 110, which is a case supporting a lower portion and a lateral portion of the induction heating cooker 100, may have a shape the upper portion of which is opened. An operation of cooking an item subject to cooking may be performed in the main body 110. Specifically, the internal pot 130 is stored in the main body 110, and various types of grain such as rice may be heated and cooked in the internal pot 130.

The lid 120, which is a case sealing the upper portion of the induction heating cooker 100, may be attached to and detached from the opened upper surface of the main body 110. The lid 120 includes at least one electronic device.

Specifically, the lid 120 may be provided with a control module 121 controlling entire operations of the induction heating cooker 100, a communication module 122 performing data communication with the main PCB of the induction heating apparatus 200, a display module 123 visually outputting state information of the induction heating cooker 100 and the like, inside the lid 120. Though not illustrated in FIG. 2, the lid 120 may further include a battery for supplying power to the above-described control module 121, communication module 122, and display module 123.

The control module 121, the communication module 122, and the display module 123 may be implemented as a printed circuit board (PCB) comprised of a plurality of integrated circuits (IC).

The lid 120 may also be provided with a pressure weight 125 for maintaining internal pressure of the induction heating cooker 100 at a constant level, and a noise reduction module 126 in which a sound absorption member is built to reduce noise when steam is discharged. In addition, the lid 120 may be provided with a steam discharge module 124 (e.g., a solenoid valve) for discharging internal steam of the induction heating cooker 100 outwards according to a specific control signal.

The lid 120 may be rotation-coupled to the upper surface of the main body 110. Specifically, the lid 120 may be rotation-coupled to the upper surface of the main body 110 and may be attached to and detached from the main body 110.

The rotation-coupling may be any coupling by which the lid 120 is coupled to or decoupled from the main body 110 by horizontally rotating with respect to the upper surface of the main body 110. The rotation-coupling, for example, may be any coupling by which a coupling projection and a coupling groove 113 provided respectively at any two objects are horizontally engaged and the two objects are coupled.

As an example, the lid 120 may be provided with a first coupling ring 127 at a lower surface of the lid 120, and the main body 110 may be provided with a second coupling ring 111, to which the first coupling ring 127 is rotation-coupled, on the upper surface of the main body 110. In this case, the lid 120 may be attached to and detached from the upper surface of the main body 110 through the rotation-coupling of the first coupling ring 127 and the second coupling ring 111.

Specifically, the first coupling ring 127 may be provided along a perimeter of the lower surface of the lid 120 in a ring shape, and the second coupling ring 111 may be provided along a perimeter of the upper surface of the main body 110 in a ring shape. Any one of the first coupling ring 127 and the second coupling ring 111 may be inserted into the other one and then rotated such that the first coupling ring 127 and the second coupling ring 111 are rotation-coupled.

Referring to FIG. 4, the first coupling ring 127 may protrude from the lower surface of the lid 120, and the second coupling ring 111 may be depressed from the upper surface of the main body 110. In other words, the first coupling ring 127 may protrude downwards and the second coupling ring 111 may include a coupling groove 113 that is depressed downwards. Accordingly, the first coupling ring 127 may be inserted in to the coupling groove 113 of the second coupling ring 111.

The first coupling ring 127 may be inserted into the coupling groove 113 of the second coupling ring 111, may be horizontally rotated with respect to the second coupling ring 111, and then may be rotation-coupled to the second coupling ring 111. To this end, each of the first coupling ring 127 and the second coupling ring 111 may include any member that are engaged with each other when the first coupling ring 127 is rotated and that couples the lid 120 to the main body 110.

For example, the first coupling ring 127 may include a plurality of stopping jaws 128, and the second coupling ring 111 may include a plurality of guide jaws 112, as illustrated in FIG. 4. When the first coupling ring 127 is inserted into the coupling groove 113 of the second coupling ring 111 and then is rotated, the plurality of stopping jaws 128 formed at the first coupling ring 127 may be engaged respectively with the plurality of guide jaws 112 formed at the second coupling ring 111.

Specifically, the plurality of stopping jaws 128 may protrude in one horizontal direction (e.g., an outward direction) and may be formed at the first coupling ring 127. The plurality of guide jaws 112 may protrude in the other horizontal direction (e.g., an inward direction) that is a direction opposite to the direction in which the plurality of stopping jaws 128 protrude and may be formed at the second coupling ring 111. Accordingly, the stopping jaw 128 and the guide jaw 112 may be engaged with each other circumferentially when the first coupling ring 127 is rotated with respect to the second coupling ring 111.

In other words, in a state in which the stopping jaw 128 and the guide jaw 112 are arranged circumferentially not to meet each other, the first coupling ring 127 may be inserted into the second coupling ring 111. When the first coupling ring 127 is rotated in the state of being inserted into the second coupling ring 111, the stopping jaw 128 may be moved circumferentially with respect to the guide jaw 112, and, when the first coupling ring 127 is rotated with respect to the second coupling ring 111 by a specific angle, the plurality of stopping jaws 128 may be completely engaged with the plurality of guide jaws 112.

When the stopping jaw 128 is engaged with the guide jaw 112, as long as the first coupling ring 127 is not rotated in an opposite direction, the lid 120 may not be separated from the main body 110 although an external force is applied perpendicularly (upwards or downwards) to the lid 120 and the main body 110.

Through the above-described structure, the lid 120 may be completely coupled to or completely separated from the main body 110. Accordingly, the lid 120 may be readily cleaned in relation to use of the induction heating cooker 100.

The process in which the lid 120 is rotation-coupled to the main body 110 is described above with reference to the structure illustrated in FIG. 4. However, the lid 120 of the disclosure may be rotation-coupled to the main body 110 through various structures used in the art to which the disclosure pertains, in addition to the structure illustrated in FIG. 4.

The internal pot 130 is stored in the main body 110 and may be heated by the coil part 140 placed along an outer surface of the internal pot 130.

The coil part 140 may be placed along the outer surface of the internal pot 130. The coil part 140, for example, may be placed along at least one of a lower surface and a lateral surface of the internal pot 130.

When the induction heating cooker 100 is put and operated at the upper portion of the induction heating apparatus 200 as illustrated in FIG. 2, the lower surface of the internal pot 130 and the working coil 210 may be placed to face each other with a bottom surface of the main body 110 therebetween. When electric currents flow through the working coil 210, a magnetic field generated by the working coil 210 may induce the electric currents to the internal pot 130, and Joule's heat may be generated in the internal pot 130 by the induced electric currents.

For generation of induced electric currents, the internal pot 130 may include any material having magnetic properties. The internal pot 130, for example, may include cast iron including iron (Fe), or clad in which iron (Fe), aluminum (Al), and stainless steel and the like are welded.

A surface area of the bottom surface of the internal pot 130 may be smaller than a surface area of the working coil 210. In other words, when the working coil 210 is a planar circular coil and the internal pot 130 has a cylindrical shape, a radius of the bottom surface of the internal pot 130 is smaller than a coil radius (Rc) of the working coil 210. When the surface area of the bottom surface of the internal pot 130 is designed to be smaller than the surface area of the working coil 210 as described above, a magnetic field generated by the working coil 210 may all be delivered to the bottom surface of the internal pot 130 without leaking in an area in which the internal pot 130 is placed.

The coil part 140 may be comprised of a power receiving coil 140a provided on the bottom surface of the main body 110 along the lower surface of the internal pot 130, and a heating coil 140b provided along the lateral surface of the internal pot 130. That is, the coil part 140 may be classified as a power receiving coil 140a and a heating coil 140b on the basis of a position at which the power receiving coil 140a and the heating coil 140b are provided.

The power receiving coil 140a may have a ring shape with a predetermined inner diameter (Rci) and a predetermined outer diameter (Rco), and may be placed at any position of the bottom surface of the main body 110. However, the power receiving coil 140a may be preferably placed in parallel with the working coil 210 at a lower portion of an edge area (RA) of the internal pot 130 such that efficiency of the heating of the internal pot 130 is maximized through below-described electromagnetic induction.

The edge area (RA), which is an area defined circumferentially with respect to a central perpendicular line (HL) of the internal pot 130, may be an area adjacent to a circumferential surface of the internal pot 130. In other words, the edge area (RA) may be an area adjacent to a circumference of the internal pot 130 when the internal pot 130 is seen from the top of the internal pot 130. Below, an arrangement of the power receiving coil 140a is described with reference to FIGS. 5a and 5b.

Referring to FIG. 5a, an edge portion (hereinafter referred to as a "rounded portion") of the bottom surface of the internal pot 130 may be rounded such that an item subject to cooking is easily taken out after cooking of the item subject to cooking is completed. Accordingly, the bottom surface of the internal pot 130 may include a flat plate area (FA) that is a flat portion and that is placed in parallel with the working coil 210, and a rounded portion that is rounded at a connected portion of the bottom surface and the lateral surface of the internal pot 130.

As an example, the edge area (RA) of the internal pot 130 may be the same as the rounded portion. In this, case, the power receiving coil 140a may be placed horizontally at the edge area (RA) of the internal pot 130, i.e., a lower portion of the rounded portion

Specifically, the flat plate area (FA) of the bottom surface of the internal pot 130 may be formed within a first reference radius (Rf1) with respect to the central perpendicular line (HL) of the internal pot 130, and the edge area (RA) of the bottom surface of the internal pot 130 may be formed between the first reference radius (Rf1) and an outer diameter (Ro) of the internal pot 130. In this structure, the power receiving coil 140a may be placed between the first reference radius (Rf1) and the outer diameter (Ro) of the internal pot 130 that is the edge area (RA).

A distance between the edge area (RA) of the internal pot 130 and the working coil 210 may be greater than a distance between the flat plate area (FA) of the internal pot 130 and the working coil 210. Accordingly, an amount of heat delivered by the magnetic field generated by the working coil 210 may be smaller in the edge area (RA) than in the flat plate area (FA).

As another example, referring to FIG. 5b, the edge area (RA) of the internal pot 130 may be perpendicularly formed outside of the internal pot 130. Specifically, the edge area (RA) may be formed between the outer diameter (Ro) of the internal pot 130 and a second reference diameter (Rf2) larger than the outer diameter (Ro) of the internal pot 130.

Accordingly, the power receiving coil 140a may be placed outside of the internal pot 130 when the internal pot 130 is seen from the top of the internal pot 130. That is, the power receiving coil 140a having a structure, in which the inner diameter (Rci) of the power receiving coil 140a is larger than the outer diameter (Ro) of the internal pot 130, may be placed at the lower portion of the internal pot 130.

However, as described below, the outer diameter (Rco) of the power receiving coil 140a may be smaller than the coil radius (Rc) of the working coil 210 such that induced electric currents are efficiently generated in the power receiving coil 140a. That is, as illustrated in FIG. 5b, the inner diameter (Rci) of the power receiving coil 140a may be designed to be larger than the outer diameter (Ro) of the internal pot 130, and the outer diameter (Rco) of the power receiving coil 140a may be designed to be smaller than the coil radius (Rc) of the working coil 210. Accordingly, an area formed by the power receiving coil 140a may all be perpendicularly included in an area formed by the working coil 210.

Thus, in the embodiment illustrated in FIG. 5b, a magnetic field generated by the working coil 210 may be delivered to the power receiving coil 140a without leaking within an area in which the power receiving coil 140a is placed.

The power receiving coil 140a, as described above, may be placed at the lower portion of the edge area (RA) to which a relatively small amount of heat is delivered, and, when performing an operation of receiving power from the below-described working coil 210, may not largely reduce an entire amount of heat delivered to the internal pot 130.

The heating coil 140b may be perpendicularly placed on an outer circumferential surface of the internal pot 130.

Referring back to FIGS. 5a and 5b, the heating coil 140b may be wound along the outer circumferential surface of the internal pot 130, and, accordingly, may be placed in close contact with the outer circumferential surface of the internal pot 130. If the main body 110 is provided with an internal pot support member for supporting the internal pot 130 in the main body 110, and the internal pot support member supports the outer circumferential surface of the internal pot 130 as well as the bottom surface of the internal pot 130, the heating coil 140b may also be placed on the internal pot support member.

The heating coil 140b may be perpendicularly placed. Specifically, the heating coil 140b is a coil having a plurality of layers according to the number of its turns, and each of the layers of the heating coil 140b may be perpendicularly arranged in parallel with each other along the outer circumferential surface of the internal pot 130.

The heating coil 140b may be electrically connected with the above-described power receiving coil 140a. In other words, one end of the heating coil 140b may be connected with one end of the power receiving coil 140a. Thus, the power receiving coil 140a and the heating coil 140b may be implemented as a single metallic wire.

The induction heating cooker 100, which operates through an interaction with the induction heating apparatus 200 in the state in which the induction heating cooker 100 is not connected with external power 400, may heat the internal pot 130 using a magnetic field generated from the induction heating apparatus 200.

The power receiving coil 140a is placed to face the working coil 210 of the induction heating apparatus 200. Accordingly, when high-frequency electric currents flow through the working coil 210, electric currents may be induced to the power receiving coil 140a through electromagnetic induction.

The heating coil 140b, as described above, may be electrically connected with the power receiving coil 140a, and, accordingly, electric currents induced to the power receiving coil 140a may flow through the heating coil 140b. When electric currents flow through the heating coil 140b, a magnetic field may be generated in the heating coil 140b, and the magnetic field generated in the heating coil 140b may induce electric currents to the outer circumferential surface of the internal pot 130 and may heat the internal pot 130, specifically, the lateral surface of the internal pot 130.

The present disclosure, as described above, may heat the lateral surface of the internal pot as well as the bottom surface of the internal pot using the magnetic field generated by the working coil, thereby forming a plurality of heat delivery paths using a single heat source and ensuring temperature uniformity of the internal pot.

The induction heating cooker 100 that operates independently in the state of being connected with the external power 400 may supply electric currents to the above-described coil part 140 and may heat the internal pot 130.

Referring to FIG. 6, the power supplying circuit 150 may supply electric currents to the coil part 140 using the external power 400.

Specifically, the power supplying circuit 150 converts power supplied from the external power 400 into high-frequency electric currents and may supply the high-frequency electric currents to the coil part 140. When the high-frequency electric currents flow through the coil part 140, a magnetic field may be generated in the coil part 140, and the magnetic field generated in the coil part 140 may induce electric currents to the surface (the lower portion and the lateral surface) of the internal pot 130, and then the internal pot 130 may be heated.

When the induction heating cooker 100 is connected with the external power 400, the power supplying circuit 150 may supply power supplied from the external power 400 to an electronic device provided at the lid 120. Specifically, an input terminal and an output terminal of the power supplying circuit 150 are respectively connected with the external power 400 and the electronic device, and, when the below-described terminals 310, 320 are connected, may supply the power supplied from the external power 400 to the electronic device.

Below, the supply of power supplied from the power receiving coil 140a to the electronic device by the power supplying circuit 150 is mainly described for convenience of description. Accordingly, a magnetic field of the working coil 210 is described hereunder as an electric power source of the induction heating cooker 100. However, description provided below may also be applied to the external power 400 as an electric power source of the induction heating cooker 100.

The power supplying circuit 150, as illustrated in FIG. 2, may be provided on one lateral surface of the main body 110 in the form of a packaged integrated circuit. To perform an operation of supplying power, the power supplying circuit 150 may be electrically connected with the power receiving coil 140a and each electronic device in the lid 120.

Referring to FIG. 6, the input terminal of the power supplying circuit 150 may be connected to the power receiving coil 140a and the output terminal of the power supplying circuit 150 may be connected to each electronic device in the lid 120 through each of the below-described terminals 310, 320. Accordingly, the power supplying circuit 150 may process induced electric currents supplied from the power receiving coil 140a and may output the processed electric currents to each electronic device.

Specifically, the power supplying circuit 150 converts electric currents induced to the power receiving coil 140a into direct currents and may supply the converted direct currents to the electronic device.

An amount of electric currents induced to the power receiving coil 140a may vary depending on an output from the working coil 210, load of the internal pot 130 (moisture included in an item subject to cooking, an amount of an item subject to cooking, the type of an item subject to cooking and the like). Additionally, an amount of electric currents induced to the power receiving coil 140a may also vary depending on a degree of matching between coils, which is determined based on a relative position of the working coil 210 and the power receiving coil 140a.

The power supplying circuit 150 may store electric currents induced to the power receiving coil 140a as a DC voltage having magnitude greater than predetermined magnitude, and may supply stable direct currents to the electronic device using the stored voltage, to prevent instability of the electronic device, which may be caused by a change in the amount of electric currents

Through the above-described method, the induction heating cooker of the present disclosure may perform a cooking operation by wirelessly receiving power from the induction heating apparatus. Accordingly, the induction heating cooker of the disclosure may perform all operations for convenience of users as well as an operation of heating an item subject to cooking without connecting to external power or having an internal battery.

The above-described operation of supplying power by the power supplying circuit 150 may be performed only when the terminal provided in the lid 120 and the terminal provided in the main body 110 are connected. Specifically, the input terminal of the power supplying circuit 150 may be directly connected to the power receiving coil 140a, while the output terminal of the power supplying circuit 150 may be connected to the electronic device through the terminal respectively provided in the lid 120 and the main body 110.

Below, a process in which the terminals provided in the lid 120 and the main body 110 connect to each other at the time of the rotation-coupling of the lid 120 is described.

Referring back to FIG. 6, the lid 120 is provided with a first terminal 310 electrically connected to the electronic device in the lid 120, and the main body 110 is provided with a second terminal 320 connected to the first terminal 310 of the lid 120 by the above-described rotation-coupling. The second terminal 320 provided in the main body 110 may be electrically connected with the power receiving coil 140a through the power supplying circuit 150.

When the lid 120 is rotation-coupled to the main body 110 through the above-described method, the first terminal 310 fixedly provided in the lid 120 and the second terminal 320 fixedly provided in the main body 110 may physically contact each other and may connect to each other.

Specifically, when the lid 120 is horizontally rotated with respect to the upper surface of the main body 110, the first terminal 310 provided in the lid 120 may be circumferentially rotated with respect to the second terminal 320 provided in the main body 110. When the lid 120 is rotated by a predetermined angle and is completely rotation-coupled to the main body 110, the first terminal 310 having been circumferentially rotated may contact the second terminal 320 at the same position.

Accordingly, the first terminal 310 and the second terminal 320 may be electrically connected, and the power supplying circuit 150 may perform the above-described operation of supplying power through the two electrically connected terminals 310, 320.

As an example, the main body 110 and the lid 120 may be respectively provided with a main body handle 22 at both lateral ends of the upper portion of the main body 110 and a lid handle 21 at both lateral ends of the lower portion of the lid 120. In this case, the first terminal 310 is provided on a lower surface of the lid handle 21, and the second terminal 320 may be provided on an upper surface of the main body handle 22.

FIG. 7a is a top view of the induction heating cooker 100, which illustrates a process in which the two terminals 310, 320 connect to each other through a rotation-coupling of the lid 120, and FIG. 7b is a view in which some parts and components of the lid 120 in FIG. 7a are omitted and which illustrates a process in which the two terminals 310, 320 connect to each other through a rotation-coupling between the above-described first coupling ring 127 and second coupling ring 111.

Referring to FIG. 7a, two first terminals 310a, 310b respectively corresponding to the positive electrode and the negative electrode may be provided on a lower surface of any one of the lid handles 21 provided at both lateral ends of the lower portion of the lid 120. Additionally, two second terminals 320a, 320b respectively corresponding to the positive electrode and the negative electrode may be provided on a upper surface of any one of the main body handles 22 provided at both lateral ends of the upper portion of the main body 110.

The lid 120 may be rotated by a central angle a with respect to the upper surface of the main body 110 and may be completely rotation-coupled to the main body 110. In this case, the lid handle 21 and the main body handle 22 may be respectively provided at both lateral ends of the lid 120 and the main body 110 such that the lid handle 21 and the main body handle 22 are completely overlapped with each other when the lid 120 is rotated by the central angle a.

When the lid handle 21 and the main body handle 22 are completely overlapped with each other, the first terminal 310 provided on the lower surface of the lid handle 21, and the second terminal 320 provided on the upper surface of the main body handle 22 may physically contact each other, and, accordingly, the first terminal 310 and the second terminal 320 may connect to each other. In other words, when the lid handle 21 and the main body handle 22 are completely overlapped with each other, the first terminal 310a corresponding to the positive electrode may connect with the second terminal 320a corresponding to the positive electrode, and the first terminal 310b corresponding to the negative electrode may connect with the second terminal 320b corresponding to the negative electrode.

The first terminal 310 may protrude from the lower surface of the lid handle 21, and the second terminal 320 may be provided at a slide groove 221 formed on the upper surface of the main body handle 22. In this case, the first terminal 310 may be inserted into the slide groove 221, may slide according to the rotation-coupling of the lid 120, and may connect to the second terminal 320.

Referring to FIG. 7b, the first coupling ring 127 may be inserted into the second coupling ring 111 in the state in which the stopping jaw 128 formed at the first coupling ring 127 of the lid 120, and the guide jaw 112 formed at the second coupling ring 111 of the main body 110 are arranged circumferentially not to meet each other. Then when the lid 120 is rotated by the central angle a, the first terminal 310 protruding from the lower surface of the lid handle 21 may also be circumferentially rotated.

When the lid 120 is rotated by an angle greater than a specific angle, the first terminal 310 protruding from the lower surface of the lid handle 21 may be circumferentially inserted into the slide groove 221 formed on the upper surface of the main body handle 22 as the lid handle 21 and the main body handle 22 start to be perpendicularly overlapped.

Then when the lid 120 is completely rotated by the central angle a, the first terminal 310 having slid circumferentially along the slide groove 221 may connect to the second terminal 320 provided at one end of the slide groove 221. Additionally, the plurality of stopping jaws 128 formed at the first coupling ring 127 may be completely engaged with the plurality of guide jaws 112 formed at the second coupling ring 111. That is, when the lid 120 is rotated by the central angle a, the lid 120 and the main body 110 are completely rotation-coupled, and the first terminal 310 provided in the lid 120 and the second terminal 320 provided in the main body 110 may completely connect to each other.

As an example, the second terminal 320 may be implemented as an elastic member into which the first terminal 310 is inserted.

Referring to FIG. 8, the second terminal 320 implemented as an elastic member may be provided at one end of the slide groove 221 provided at the main body handle 22 in a concave shape. Specifically, the second terminal 320 may include an opened portion 321 and a fixed portion 322, and the opened portion 321 into which the first terminal 310 is inserted may be formed to be wider than the fixed portion 322 which fixes the first terminal 310. Additionally, a width of the fixed portion 322 may be narrower than a width of the first terminal 310.

Accordingly, when the first terminal 310 is inserted into the second terminal 320 through the opened portion 321, the width of the fixed portion 322 may become as wide as the width of the first terminal 310 by elasticity, and the first terminal 310 may be completely inserted into the second terminal 320. After the first terminal 310 is completely inserted, the fixed portion 322 may apply elastic force to the inside of the first terminal 310 by the elasticity of the fixed portion 322. Thus, the first terminal 310 may be fixed by the second terminal 320.

With the above-described structure of the second terminal 320, contact stability between the terminals may be improved.

Unlike the above-describe induction heating cooker, the induction heating cooker 100 of the present disclosure may not include the main body handle 22 and the lid handle 21. Although the induction heating cooker 100 is provided with the main body handle 22 and the lid handle 21, each of the handles 21, 22 may not be provided with the terminals.

For example, the first terminal 310 may be provided on a lower surface of the stopping jaw 128 formed at the first coupling ring 127 of the lid 120, and the second terminal 320 may be provided on an upper surface of the guide jaw 112 formed at the second coupling ring 111 of the main body 110 to be engaged with the stopping jaw 128.

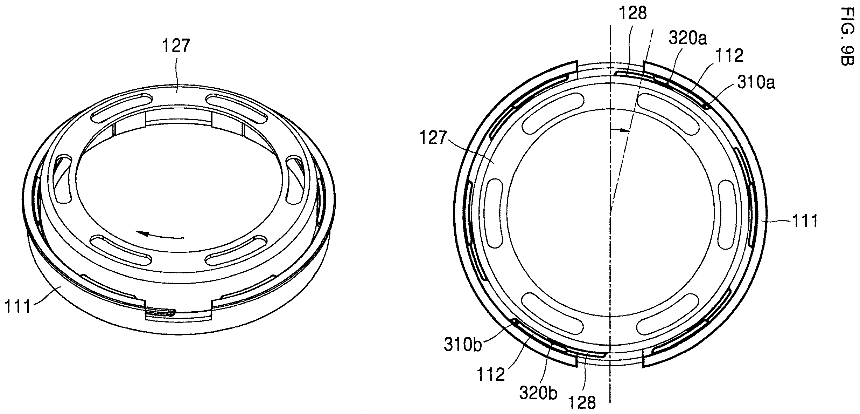

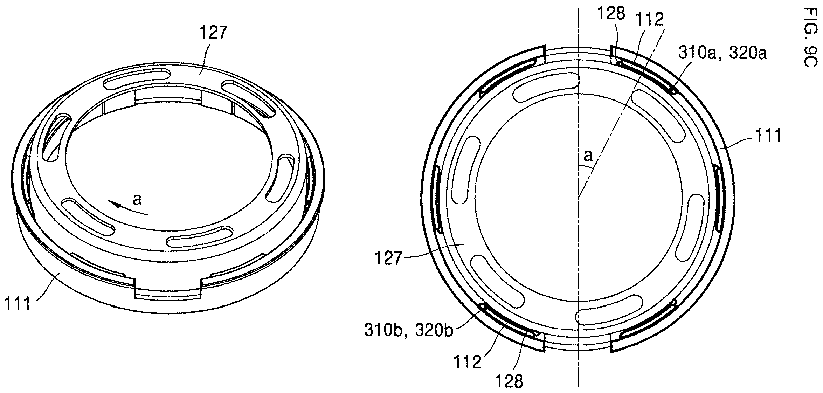

FIGS. 9a, 9b and 9c are views illustrating a location relation of the first coupling ring 127 and the second coupling ring 111, and a location relation of the terminals provided at each of the coupling rings 111, 127 respectively when the rotation-coupling is started, when the rotation-coupling is being performed, and when the rotation-coupling is completed.

The first and second terminals 310, 320 illustrated in FIGS. 9a to 9c do not indicate an actual arrangement and shape of the terminals and should be interpreted as indicating a location of each of the terminals 310, 320. For example, the first terminal 310 illustrated in FIG. 9a indicates a location of the first terminal 310. Thus, it should be understood that the first terminal 310 is actually placed on the lower surface of the stopping jaw 128.

Referring to FIG. 9a, the first terminal 310 may be provided on the lower surface of one end of the stopping jaw 128, and the second terminal 320 may be provided on the upper surface of one end of the guide jaw 112. Specifically, the first terminals 310a, 310b corresponding to the positive electrode and the negative electrode may be respectively provided on the lower surface of one end of any one stopping jaw 128 of the plurality of stopping jaws 128 formed at the first coupling ring 127. Additionally, the second terminals 320a, 320b corresponding to the positive electrode and the negative electrode may be respectively provided on the upper surface of one end of any one guide jaw 112 of the plurality of guide jaws 112 formed at the second coupling ring 111.

For the rotation-coupling, the first coupling ring 127 may be inserted into the second coupling ring 111 in the state in which the stopping jaw 128 and the guide jaw 112 are arranged circumferentially not to meet each other. In this case, the first terminal 310 formed at the stopping jaw 128 and the second terminal 320 formed at the guide jaw 112 may be spaced a distance corresponding to the central angle a apart from each other.

Referring to FIG. 9b, in the state in which the first coupling ring 127 is inserted into the second coupling ring 111, the first coupling ring 127 may be circumferentially rotated by a predetermined angle. Accordingly, the stopping jaw 128 and the guide jaw 112 may start to be engaged with each other, and the first terminal 310 provided on the upper surface of the stopping jaw 128 may slide along the lower surface of the guide jaw 112.

Referring to FIG. 9c, the first coupling ring 127 may be rotated circumferentially by the central angle a. Accordingly, the stopping jaw 128 and the guide jaw 112 may be completely engaged with each other, and the first terminal 310 provided on the lower surface of the stopping jaw 128 may slide to the second terminal 320 provided on the lower surface of one end of the guide jaw 112 and may contact the second terminal 320.

In summary, through the rotation-coupling consecutively illustrated in FIGS. 9a to 9c, the stopping jaw 128 formed at the first coupling ring 127, and the guide jaw 112 formed at the second coupling ring 111 may be completely engaged, and, at the same time, the first terminal 310 provided at the stopping jaw 128, and the second terminal 320 provided at the guide jaw 112 may connect to each other on the same perpendicular line.

When the first and second terminals 310, 320 connect to each other as described above, the power supplying circuit 150 may supply electric currents induced to the power receiving coil 140a to the electronic device in the lid 120 through the first and second terminals 310, 320.

The lid 120, as illustrated in FIG. 2, may further include a power conversion module 180.

Like the power supplying circuit 150, the power conversion module 180 may be provided in the lid 120 in the form of a packaged integrated circuit. Referring to FIG. 6, an input terminal of the power conversion module 180 may be connected to a first electrode and an output terminal of the power conversion module 180 may be connected to each of the electronic devices in the lid 120.

Accordingly, the power conversion module 180 may convert power supplied through the first terminal 310 into a predetermined-frequency AC voltage or into an predetermined-magnitude DC voltage, and may supply the predetermined-frequency AC voltage and the predetermined-magnitude DC voltage to each electronic device.

Specifically, each electronic device in the lid 120 may be supplied with the predetermined-frequency AC voltage or the predetermined-magnitude DC voltage as power to perform operations, according to its specification. The power supplying circuit 150, as described above, may output a DC voltage through the first and second terminals 310, 320.

The power conversion module 180 may convert the DC voltage supplied from the power supplying circuit 150 into a predetermined-frequency AC voltage adequate for specifications of each electronic device and may output the predetermined-frequency AC voltage. Additionally, the power conversion module 180 may increase or decrease the DC voltage supplied from the power supplying circuit 150 and may output a predetermined-magnitude DC voltage adequate for specifications of each electronic device. Accordingly, each electronic device may operate using a voltage adequate for its specifications as power.

Further, the power conversion module 160 may supply power supplied through the first terminal 310 to a battery 170, and the battery 170 may store the power supplied through the first terminal 310 as reserved power.

The battery 170 may be connected to each electronic device in the lid 120, and each electronic device may also receive power from the battery 170 to operate. For example, each electronic device may receive power output from the power conversion module 160 to operate, and, when the power conversion module 160 no longer outputs power, may receive power output from the battery 170 to operate .

The control module 121 determines a coupling state of the lid 120 on the basis of an amount of electric currents supplied to the electronic device or on the basis of magnitude of a voltage detected in the first terminal 310.

The first and second terminals 310, 320, as described above, may be connected based on whether the lid 120 is rotation-coupled, and the electronic device is provided with power only when the first and second terminals 310, 320 are connected.

Accordingly, the control module 121 indirectly determines a coupling state of the lid 120 on the basis of an amount of electric currents supplied to the electronic device or magnitude of a voltage detected in the first terminal 310. The coupling state may be classified as a normal state and abnormal state.

As an example, when an amount of electric currents supplied to the electronic device is greater than a reference amount of electric currents, the control module 121 may determine the coupling state is a normal state, and when an amount of electric currents supplied to the electronic device is less than the reference amount of electric currents, the control module 121 may determine the coupling state is an abnormal state.

The control module 121 may detect an amount of electric currents supplied to each of the electronic devices. Any electric current sensor or any electric current detection circuit may be used for the operation of detecting an amount of electric currents performed by the control module 121.

When the lid 120 is completely rotation-coupled to the main body 110, the first and second terminals 310, 320 connect to each other. Accordingly, electric currents may be supplied to the electronic device. The control module 121 may identify a reference amount of electric currents corresponding to a specific electronic device with reference to an internal memory, and may compare the identified reference amount of electric currents with an amount of electric currents supplied to the specific electronic device.

When the amount of electric currents supplied to the specific electronic device is greater than the reference amount of electric currents as a result of comparison, the control module 121 may suppose that the lid 120 is completely rotation-coupled to the main body 110 and may determine that the coupling state is a normal state. When the amount of electric currents supplied to the specific electronic device is less than the reference amount of electric currents, the control module 121 may suppose that the lid 120 is incompletely rotation-coupled to the main body 110 and may determine that the coupling state is an abnormal state.

As another example, when magnitude of a voltage detected in the first terminal 310 is greater than magnitude of a reference voltage, the control module 121 may determine the coupling state is a normal state, and, when magnitude of a voltage detected in the first terminal 310 is less than the magnitude of the reference voltage, the control module 121 may determine that the coupling state is an abnormal state.

The control module 121 may detect magnitude of a voltage supplied to the first terminal 310. Any voltage sensor or any voltage detection circuit may be used for the operation of detecting a voltage performed by the control module 121.

When the lid 120 is completely rotation-coupled to the main body 110, the first and second terminals 310, 320 connect to each other. Accordingly, a voltage may be supplied to the first terminal 310. The control module 121 may identify a reference voltage for the first terminal 310 with reference to the internal memory and may compare magnitude of the identified reference voltage with magnitude of the voltage supplied to the first terminal 310.

When the magnitude of a voltage supplied to the first terminal 310 is greater than the magnitude of the reference voltage as a result of comparison, the control module 121 may suppose that the lid 120 is completely rotation-coupled to the main body 110 and may determine that the coupling state is a normal state. When the magnitude of a voltage supplied to the first terminal 310 is less than the magnitude of the reference voltage, the control module 121 may suppose that the lid 120 is incompletely rotation-coupled to the main body 110 and may determine that the coupling state is an abnormal state.

The induction heating cooker of the present disclosure, as described above, may electrically figure out whether the main body and the lid are normally coupled without an additional physical component, thereby accurately detecting a coupling state of the lid without causing an increase in production costs of an induction heating cooker and a decrease in the productivity of an induction heating cooker.

Additionally, when the coupling state of the lid 120 is an abnormal state, the control module 121 may provide an output control signal to the display module 123, and the display module 123 may output abnormality information according to the output control signal.

The abnormality information may be any information showing the coupling state of the lid 120 is an abnormal state. The abnormality information, for example, may be text information or image information that requests a user to normally couple the lid 120 to the main body 110.

Specifically, when determining the coupling state of the lid 120 is an abnormal state, the control module 121 may provide an output control signal that is a digital signal to the display module 123. The display module 123 may receive the output control signal from the control module 121, and, with reference to the internal memory, may identify abnormality information corresponding to the output control signal, and may output the identified abnormality information visually.

The induction heating cooker of the present disclosure, as described above, may inform the user of information on an abnormal coupling of the main body and the lid, thereby preventing an explosion or a fire caused by the abnormal coupling of the lid at the time of cooking.

The present disclosure has been described with reference to the embodiments illustrated in the drawings. However, the disclosure may be replaced, modified and changed by one having ordinary skill in the art to which the disclosure pertains in various different forms insofar as they are encompassed by the appended claims. Therefore, the disclosure is not limited to the embodiments and the drawings set forth herein.

## Claims

1. An induction heating cooker, comprising:
a lid (120) comprising at least one electronic device and a first terminal (310) electrically connected to the electronic device;
a main body (110) having an opened upper surface and comprising a second terminal (320) adapted to be connected to the first terminal (310) by a rotation-coupling of the lid (120) with respect to the opened upper surface;
an internal pot (130) that is stored in the main body (110);
a coil part (140) configured to heat the internal pot (130) using external power (400) when the external power (400) is supplied, and to which electric currents are induced by a magnetic field generated by a working coil (210) of an induction heating apparatus (200) when the external power (400) is not supplied;
a power supplying circuit (150) configured to supply power to an electronic device provided in the lid (120) through the first and second terminals (310, 320); and
a control module (121) configured to determine a coupling state of the lid (120) on the basis of an amount of electric currents supplied to the electronic device or magnitude of a voltage detected in the first terminal (310).

2. The induction heating cooker of claim 1, wherein the lid (120) comprises a first coupling ring (127) on a lower surface of the lid (120), and
the main body (110) comprises a second coupling ring (111) adapted to be rotation-coupled with the first coupling ring (127) on an upper surface of the main body (110).

3. The induction heating cooker of claim 2, wherein the second coupling ring (111) includes a coupling groove (113) which is depressed from the upper surface of the main body (110), and
the first coupling ring (127) is adapted to rotate after being inserted into the coupling groove (113) and is rotation-coupled to the second coupling ring (111).

4. The induction heating cooker of claim 3, wherein the first coupling ring (127) includes a stopping jaw (128), and the second coupling ring (111) includes a guide jaw (112), and
when the first coupling ring (127) is inserted into the coupling groove (113) and then is rotated, the stopping jaw (128) is configured to engage with the guide jaw (112).

5. The induction heating cooker of claim 4, wherein the first terminal (310) is provided on a lower surface of the stopping jaw (128), and
the second terminal (320) is provided on an upper surface of the guide jaw (112) engaged with the stopping jaw (128).

6. The induction heating cooker of any one of claims 1 to 5, wherein the main body (110) comprises a main body handle (22) at both lateral ends of an upper portion of the main body (110), and the lid (120) comprises a lid handle (21) at both lateral ends of a lower portion of the lid (120),
the first terminal (310) is provided on a lower surface of the lid handle (21), and the second terminal (320) is provided on an upper surface of the main body handle (22).

7. The induction heating cooker of claim 6, wherein the first terminal (310) protrudes from the lower surface of the lid handle (21), and the second terminal (320) is provided at a slide groove (221) formed on the upper surface of the main body handle (22), and
the first terminal (310) is adapted to be inserted into the slide groove (221), to slide according to the rotation-coupling, and to connect to the second terminal (320).

8. The induction heating cooker of any one of claims 1 to 7, wherein the coil part (140) includes a power receiving coil (140a) which is provided on a bottom surface of the main body (110) and adapted to receive electric currents induced by a magnetic field generated by the working coil (210) of the induction heating apparatus (200).

9. The induction heating cooker of claim 8, wherein the power supplying circuit (150) is configured to supply electric currents, induced to the power receiving coil (140a), to an electronic device provided in the lid (120) through the first and second terminals (310, 320).

10. The induction heating cooker of any one of claims 1 to 9, wherein the coil part (140) includes a power receiving coil (140a) that is horizontally placed at a lower portion of an edge area of the internal pot (130) and is configured to heat a bottom surface of the internal pot (130), and
a heating coil (140b) that is placed perpendicularly on an outer circumferential surface of the internal pot (130), connectable to the power receiving coil (140a), and is configured to heat a lateral surface of the internal pot (130).

11. The induction heating cooker of any one of claims 1 to 10, wherein the power supplying circuit (150) is configured to supply electric currents to the coil part (140) using the external power (400).

12. The induction heating cooker of any one of claims 1 to 11, wherein the power supplying circuit (150) is configured to convert electric currents induced to the coil part (140) into direct currents and to supply the direct currents to the electronic device

13. The induction heating cooker of any one of claims 1 to 12, wherein when the amount of electric currents supplied to the electronic device is greater than the reference amount of electric current, the control module (121) is configured to determine that the coupling state is a normal state, and, when the amount of electric current supplied to the electronic device is less than the reference amount of electric current, the control module (121) is configured to determine that the coupling state is an abnormal state

14. The induction heating cooker of any one of claims 1 to 13, wherein when magnitude of a voltage detected in the first terminal (310) is greater than magnitude of a reference voltage, the control module (121) is configured to determine that the coupling state is a normal state, and, when magnitude of a voltage detected in the first terminal (310) is less than the magnitude of the reference voltage, the control module (121) is configured to determine that the coupling state is an abnormal state.

## Patentansprüche

1. Induktionsheizungs-Kochvorrichtung, die aufweist:
einen Deckel (120), der mindestens eine elektronische Vorrichtung und einen ersten Anschluss (310) aufweist, der elektrisch mit der elektronischen Vorrichtung verbunden ist;
einen Hauptkörper (110), der eine offene obere Fläche aufweist und einen zweiten Anschluss (320) aufweist, der eingerichtet ist, mit dem ersten Anschluss (310) durch eine Drehkopplung des Deckels (120) bezüglich der offenen oberen Fläche verbunden zu werden;
einen Innentopf (130), der im Hauptkörper (110) untergebracht ist;
einen Spulenteil (140), der konfiguriert ist, den Innentopf (130) mittels Fremdstrom (400) zu erwärmen, wenn der Fremdstrom (400) zugeführt wird, und in der elektrische Ströme durch ein Magnetfeld induziert werden, das durch eine Arbeitsspule (210) einer Induktionsheizvorrichtung (200) erzeugt wird, wenn der Fremdstrom (400) nicht zugeführt wird;
eine Stromversorgungsschaltung (150), die konfiguriert ist, einer im Deckel (120) vorgesehenen elektronischen Vorrichtung durch den ersten und zweiten Anschluss (310, 320) Strom zuzuführen; und
ein Steuermodul (121), das konfiguriert ist, auf der Grundlage eines Betrags der elektrischen Ströme, die der elektronischen Vorrichtung zugeführt werden, oder einer Größe einer am ersten Anschluss (310) erfassten Spannung einen Kopplungszustand des Deckels (120) festzustellen.

2. Induktionsheizungs-Kochvorrichtung nach Anspruch 1, wobei der Deckel (120) an einer unteren Fläche des Deckels (120) einen ersten Kopplungsring (127) aufweist, und
der Hauptkörper (110) einen zweiten Kopplungsring (111) aufweist, der eingerichtet ist, mit dem ersten Kopplungsring (127) an einer oberen Fläche des Hauptkörpers (110) drehgekoppelt zu werden.

3. Induktionsheizungs-Kochvorrichtung nach Anspruch 2, wobei der zweite Kopplungsring (111) eine Kopplungsnut (113) aufweist, die von der oberen Fläche des Hauptkörpers (110) vertieft ist, und
der erste Kopplungsring (127) eingerichtet ist, sich zu drehen, nachdem er in die Kopplungsnut (113) eingesetzt und mit dem zweiten Kopplungsring (111) drehgekoppelt worden ist.

4. Induktionsheizungs-Kochvorrichtung nach Anspruch 3, wobei der erste Kopplungsring (127) eine Haltebacke (128) aufweist, und der zweite Kopplungsring (111) eine Führungsbacke (112) aufweist, und
wenn der erste Kopplungsring (127) in die Kopplungsnut (113) eingesetzt und dann gedreht wird, die Haltebacke (128) konfiguriert ist, mit der Führungsbacke (112) in Eingriff zu treten.

5. Induktionsheizungs-Kochvorrichtung nach Anspruch 4, wobei der erste Anschluss (310) an einer unteren Fläche der Haltebacke (128) vorgesehen ist, und
der zweite Anschluss (320) an einer oberen Fläche der Führungsbacke (112) vorgesehen ist, die mit der Haltebacke (128) in Eingriff steht.

6. Induktionsheizungs-Kochvorrichtung nach einem der Ansprüche 1 bis 5, wobei der Hauptkörper (110) einen Hauptkörpergriff (22) an beiden lateralen Enden eines oberen Abschnitts des Hauptkörpers (110) aufweist, und der Deckel (120) einen Deckelgriff (21) an beiden lateralen Enden eines unteren Abschnitts des Deckels (120) aufweist,
der erste Anschluss (310) an einer unteren Fläche des Deckelgriffs (21) vorgesehen ist, und der zweite Anschluss (320) an einer oberen Fläche des Hauptkörpergriffs (22) vorgesehen ist.

7. Induktionsheizungs-Kochvorrichtung nach Anspruch 6, wobei der erste Anschluss (310) von der unteren Fläche des Deckelgriffs (21) vorsteht, und der zweite Anschluss (320) an einer Gleitnut (221) vorgesehen ist, die an der oberen Fläche des Hauptkörpergriffs (22) ausgebildet ist, und
der erste Anschluss (310) eingerichtet ist, in die Gleitnut (221) eingesetzt zu werden, um gemäß der Drehkopplung zu gleiten und sich mit dem zweiten Anschluss (320) zu verbinden.

8. Induktionsheizungs-Kochvorrichtung nach einem der Ansprüche 1 bis 7, wobei der Spulenteil (140) eine Stromaufnahmespule (140a) aufweist, die an einer Bodenfläche des Hauptkörpers (110) vorgesehen und eingerichtet ist, elektrische Ströme aufzunehmen, die durch ein Magnetfeld induziert werden, das durch die Arbeitsspule (210) der Induktionsheizvorrichtung (200) erzeugt wird.

9. Induktionsheizungs-Kochvorrichtung nach Anspruch 8, wobei die Stromversorgungsschaltung (150) konfiguriert ist, in der Stromaufnahmespule (140a) induzierte elektrische Ströme einer im Deckel (120) vorgesehenen elektronischen Vorrichtung durch den ersten und den zweiten Anschluss (310, 320) zuzuführen.

10. Induktionsheizungs-Kochvorrichtung nach einem der Ansprüche 1 bis 9, wobei der Spulenteil (140) eine Stromaufnahmespule (140a) aufweist, die horizontal an einem unteren Abschnitt eines Randbereichs des Innentopfs (130) angeordnet und konfiguriert ist, eine Bodenfläche des Innentopfs (130) zu erwärmen, und
eine Heizspule (140b), die senkrecht an einer Außenumfangsfläche des Innentopfs (130) angeordnet ist, mit der Stromaufnahmespule (140a) verbindbar ist und konfiguriert ist, eine Seitenfläche des Innentopfs (130) zu erwärmen.

11. Induktionsheizungs-Kochvorrichtung nach einem der Ansprüche 1 bis 10, wobei die Stromversorgungsschaltung (150) konfiguriert ist, mittels des Fremdstroms (400) dem Spulenteil (140) elektrische Ströme zuzuführen.

12. Induktionsheizungs-Kochvorrichtung nach einem der Ansprüche 1 bis 11, wobei die Stromversorgungsschaltung (150) konfiguriert ist, im Spulenteil (140) induzierte elektrische Ströme in Gleichströme umzuwandeln und die Gleichströme der elektronischen Vorrichtung zuzuführen.

13. Induktionsheizungs-Kochvorrichtung nach einem der Ansprüche 1 bis 12, wobei, wenn der Betrag der elektrischen Ströme, die der elektronischen Vorrichtung zugeführt werden, größer als der Referenzbetrag des elektrischen Stroms ist, das Steuermodul (121) konfiguriert ist festzustellen, dass sich der Kopplungszustand in einem Normalzustand befindet, und, wenn der Betrag des elektrischen Stroms, der der elektronischen Vorrichtung zugeführt wird, kleiner als der Referenzbetrag des elektrischen Stroms ist, das Steuermodul (121) konfiguriert ist festzustellen, dass sich der Kopplungszustand in einem anormalen Zustand befindet.

14. Induktionsheizungs-Kochvorrichtung nach einem der Ansprüche 1 bis 13, wobei wenn die Größe einer am ersten Anschluss (310) erfassten Spannung größer als die Größe einer Referenzspannung ist, das Steuermodul (121) konfiguriert ist festzustellen, dass sich der Kopplungszustand in einem Normalzustand befindet, und, wenn die Größe einer am ersten Anschluss (310) erfassten Spannung kleiner als die Größe der Referenzspannung ist, das Steuermodul (121) konfiguriert ist festzustellen, dass sich der Kopplungszustand in einem anormalen Zustand befindet.

## Revendications

1. Appareil de cuisson à chauffage par induction, comprenant :
un couvercle (120) comprenant au moins un dispositif électronique et une première borne (310) connectées électriquement au dispositif électronique ;
un corps principal (110) ayant une surface supérieure ouverte et comprenant une deuxième borne (320) adaptée pour être connectée à la première borne (310) par un accouplement en rotation du couvercle (120) par rapport à la surface supérieure ouverte ;
un creuset intérieur (130) contenu dans le corps principal (110) ;
une partie d'enroulement (140) prévue pour chauffer le creuset intérieur (130) au moyen d'une énergie extérieure (400) lorsque l'énergie extérieure (400) est fournie, et vers laquelle des courants électriques sont induits par un champ magnétique généré par une bobine de travail (210) d'un appareil de chauffage par induction (200) lorsque l'énergie extérieure (400) n'est pas fournie ;
un circuit d'alimentation électrique (150) prévu pour fournir de l'énergie à un dispositif électronique prévu dans le couvercle (120) via la première et la deuxième bornes (310, 320) ; et
un module de commande (121) prévu pour déterminer un état d'accouplement du couvercle (120) sur la base d'une intensité des courants électriques fournis au dispositif électronique ou de l'amplitude d'une tension détectée sur la première borne (310).

2. Appareil de cuisson à chauffage par induction selon la revendication 1, où le couvercle (120) comprend une première bague d'accouplement (127) sur une surface inférieure du couvercle (120), et
le corps principal (110) comprend une deuxième bague d'accouplement (111) adaptée pour être connectée à la première bague d'accouplement (127) par un accouplement en rotation sur une surface supérieure du corps principal (110).

3. Appareil de cuisson à chauffage par induction selon la revendication 2, où la deuxième bague d'accouplement (111) présente une rainure d'accouplement (113) ménagée dans la surface supérieure du corps principal (110), et
la première bague d'accouplement (127) est adaptée pour tourner après insertion dans la rainure d'accouplement (113) et est accouplée en rotation à la deuxième bague d'accouplement (111).

4. Appareil de cuisson à chauffage par induction selon la revendication 3, où la première bague d'accouplement (127) présente une mâchoire d'arrêt (128), et la deuxième bague d'accouplement (111) présente une mâchoire de guidage (112), et où,
lorsque la première bague d'accouplement (127) est insérée dans la rainure d'accouplement (113) puis tournée, la mâchoire d'arrêt (128) est prévue pour venir en prise avec la mâchoire de guidage (112).

5. Appareil de cuisson à chauffage par induction selon la revendication 4, où la première borne (310) est prévue sur une surface inférieure de la mâchoire d'arrêt (128), et
la deuxième borne (320) est prévue sur une surface supérieure de la mâchoire de guidage (112) en prise avec la mâchoire d'arrêt (128).

6. Appareil de cuisson à chauffage par induction selon l'une des revendications 1 à 5, où le corps principal (110) comprend une poignée (22) de corps principal aux deux extrémités latérales d'une partie supérieure du corps principal (110), et le couvercle (120) comprend une poignée (21) de couvercle aux deux extrémités latérales d'une partie inférieure du couvercle (120),
la première borne (310) est prévue sur une surface inférieure de la poignée (21) de couvercle, et la deuxième borne (320) est prévue sur une surface supérieure de la poignée (22) de corps principal.

7. Appareil de cuisson à chauffage par induction selon la revendication 6, où la première borne (310) est en saillie depuis la surface inférieure de la poignée (21) de couvercle, et la deuxième borne (320) est prévue sur une rainure de coulissement (221) formée sur la surface supérieure de la poignée (22) de corps principal, et
la première borne (310) est adaptée pour être insérée dans la rainure de coulissement (221), pour coulisser en fonction de l'accouplement en rotation, et pour être connectée à la deuxième borne (320).

8. Appareil de cuisson à chauffage par induction selon l'une des revendications 1 à 7, où la partie d'enroulement (140) comprend un enroulement de réception d'énergie (140a) prévu sur une surface de fond du corps principal (110) et adapté pour recevoir des courants électriques induits par un champ magnétique généré par la bobine de travail (210) de l'appareil de chauffage par induction (200).

9. Appareil de cuisson à chauffage par induction selon la revendication 8, où le circuit d'alimentation électrique (150) est prévu pour fournir des courants électriques, induits vers l'enroulement de réception d'énergie (140a), à un dispositif électronique prévu dans le couvercle (120) via la première et la deuxième bornes (310, 320).

10. Appareil de cuisson à chauffage par induction selon l'une des revendications 1 à 9, où la partie d'enroulement (140) comprend un enroulement de réception d'énergie (140a) disposé horizontalement sur une partie inférieure d'une zone de bord du creuset intérieur (130) et prévu pour chauffer une surface de fond du creuset intérieur (130), et
un enroulement de chauffage (140b) disposé perpendiculairement sur une surface circonférentielle extérieure du creuset intérieur (130), pouvant être connecté à l'enroulement de réception d'énergie (140a), et prévu pour chauffer une surface latérale du creuset intérieur (130).

11. Appareil de cuisson à chauffage par induction selon l'une des revendications 1 à 10, où le circuit d'alimentation électrique (150) est prévu pour fournir des courants électriques à la partie d'enroulement (140) au moyen de l'énergie extérieure (400).

12. Appareil de cuisson à chauffage par induction selon l'une des revendications 1 à 11, où le circuit d'alimentation électrique (150) est prévu pour convertir en courants continus des courants électriques induits vers la partie d'enroulement (140) et pour fournir les courants continus au dispositif électronique.

13. Appareil de cuisson à chauffage par induction selon l'une des revendications 1 à 12, où, si l'intensité de courant électrique fourni au dispositif électronique est supérieure à l'intensité de référence du courant électrique, le module de commande (121) est prévu pour déterminer que l'état d'accouplement est un état normal, et où, si l'intensité de courant électrique fourni au dispositif électronique est inférieure à l'intensité de référence du courant électrique, le module de commande (121) est prévu pour déterminer que l'état d'accouplement est un état anormal.

14. Appareil de cuisson à chauffage par induction selon l'une des revendications 1 à 13, où, si l'amplitude d'une tension détectée sur la première borne (310) est supérieure à l'amplitude d'une tension de référence, le module de commande (121) est prévu pour déterminer que l'état d'accouplement est un état normal, et, si l'amplitude d'une tension détectée sur la première borne (310) est inférieure à l'amplitude de la tension de référence, le module de commande (121) est prévu pour déterminer que l'état d'accouplement est un état anormal.
